**Europäisches Patentamt**

**European Patent Office**

**Office européen des brevets**

(19)

(11) Numéro de publication : **0 514 254 A1**

(12) # DEMANDE DE BREVET EUROPEEN

(21) Numéro de dépôt : **92401289.1**

(22) Date de dépôt : **12.05.92**

(51) Int. Cl.⁵ : **H04N 5/33**, H04N 5/20

(30) Priorité : **14.05.91 FR 9105811**

(43) Date de publication de la demande : **19.11.92 Bulletin 92/47**

(84) Etats contractants désignés : **DE FR GB IT SE**

(71) Demandeur : **THOMSON-CSF**
**51, Esplanade du Général de Gaulle**
**F-92800 Puteaux (FR)**

(72) Inventeur : **Bertrand, Francis**
**THOMSON-CSF, SCPI, Cédex 67**
**F-92045 Paris la Défense (FR)**
Inventeur : **Blondel, Philippe**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé de traitement de signal pour la détection infra-rouge de cible, notamment à faible contraste thermique, et circuit de mise en oeuvre.**

(57) L'invention concerne un procédé et un circuit de traitement de signal issu d'un détecteur à transfert de charges et destiné à la formation d'images en phase de recherche et en phase de poursuite de cibles.

Le procédé consiste notamment à, d'une part, amplifier de manière non linéaire le signal $S_E$ provenant du détecteur (2) en amplifiant davantage les signaux de faible niveau et à augmenter la sensibilité du signal après codage et, d'autre part, à corriger le signal $S_E$ des écarts de non-uniformité et de niveau continu en amont de l'amplification non linéaire.

Le circuit de mise en oeuvre comporte notamment un additionneur (10), un amplificateur non-linéaire (11) couplé à un échantillonneur/codeur (15) dont une sortie est reliée à un circuit d'augmentation de sensibilité (16) et dont une autre sortie est reliée à un processeur (18) qui fournit un signal corrigé $S_x$ à soustraire au signal d'entrée $S_E$ par le biais de l'additionneur (10).

Application à la détection de cible de faible signature, en particulier en présence de contre-mesures (leurres pyrotechniques, brouilleurs).

FIG.3

L'invention concerne le domaine de la détection infrarouge de cibles à faible contraste thermique, et a pour objet, plus précisément, un procédé de traitement de signal de détecteur matriciel et un circuit de mise en oeuvre d'un tel procédé.

Un équipement aéroporté, tel qu'un autodirecteur à détecteur infrarouge, reçoit une très grande variation d'énergie lumineuse tant du fait des objets à détecter que du fond de scène observée. Par exemple, entre un avion de pleine face situé à une distance de 5 à 10 km, fournissant un niveau de luminance minimal, et des réflexions solaires spéculaires ou des leurres pyrotechniques à courte distance, donnant un signal maximal, un rapport de $10^7$ peut être typiquement atteint. Quant au niveau de fond, il varie de manière importante selon sa nature (ciel ou fond de sol) et surtout en fonction de la température du dôme d'entrée qui dépend elle-même de la vitesse de vol et de l'altitude ; à titre d'exemple, une dynamique sur trois à quatre décades est possible pour un autodirecteur de missile AIR/AIR à nombre de Mach élevé.

Le problème est, dans les conditions évoquées, de disposer d'un outil capable de détecter des cibles de très faible signature par rapport au fond, par exemple un aéronef de pleine face, en même temps que d'"intégrer" des niveaux de fond très élevés. Pour le résoudre, il est nécessaire de pouvoir établir, à partir d'un signal de détection donné, un rapport de niveaux S/B (Signal/Bruit) suffisamment élevé avec un seuil de détection suffisamment bas.

Avec un détecteur à transfert de charges de type matriciel, qui dispose d'un grand nombre de pixels (par exemple 128 x 128), le rapport S/B est amélioré par l'application, après échantillonnage du signal, de certaines techniques connues : il s'agit des traitements de type TDI (initiales de "Time Delay and Integration" en anglais, c'est-à-dire à "Temps d'Intégration Différé") en phase de Recherche de cible, et du type Post-Integration en phase de poursuite de cible. Le traitement TDI consiste à additionner successivement les niveaux correspondant aux flux lumineux provenant d'un même point de la scène observée, cette addition étant effectuée en phase avec la vitesse de balayage de la matrice de détection. En phase de poursuite de cible, la matrice est utilisée sans balayage, comme une rétine, la scène observée se modifiant peu ; la post-intégration consiste alors à sommer, par mémorisation, n "images" successives correspondant à n intégrations successives de charges.

Or, avec ces techniques, une bonne discrimination entre une cible de faible signature et une crête de bruit est incompatible avec la prise en compte d'une très grande "dynamique" de signal. En effet, pour que ces techniques soient efficaces, il faudrait que le niveau associé au dernier bit d'échantillonnage, appelé LSB (initiales de "Last Significant Bit" en anglais, c'est-à-dire "dernier bit significatif") soit inférieur à l'écart-type du bruit. Mais le rapport élevé entre la charge de saturation $Q_{sat}$ d'un détecteur matriciel et le niveau associé au LSB de l'échantillonneur (un tel rapport correspondant à la dynamique à respecter) nécessite un codage sur toute une plage de 14 à 16 bits. Malheureusement, des échantillonneurs/codeurs de cette précision fonctionnant à la cadence de sortie d'un détecteur matriciel, typiquement 5 à 10 MHz, n'existent pas.

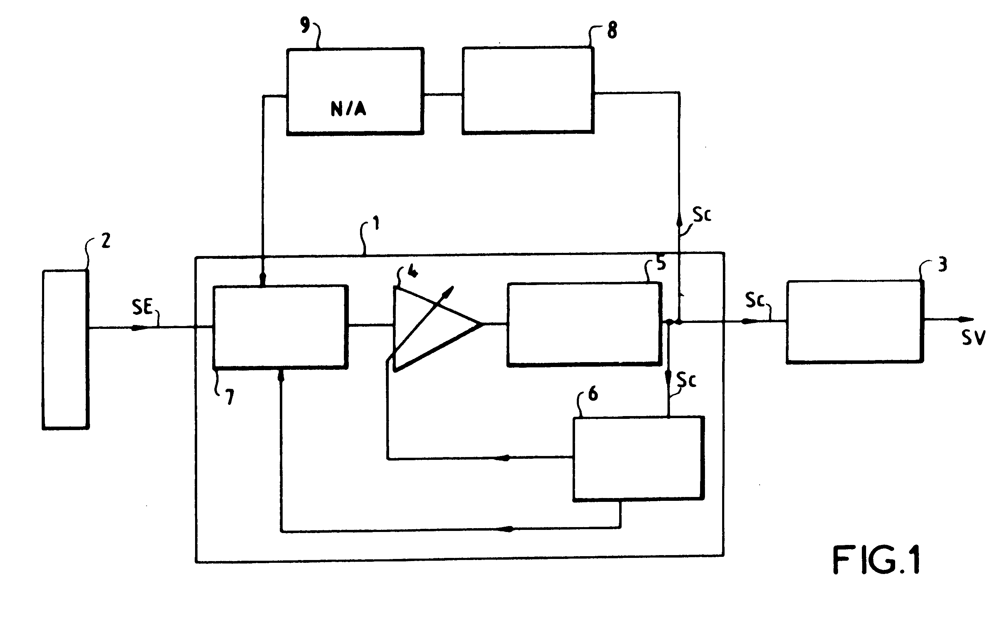

Pour ramener un codeur dans des conditions de fonctionnement permettant une détection adaptée, un circuit selon l'Art Antérieur, illustré à la figure 1, met en oeuvre la technique classique de la commande Automatique de Gain, en abrégé CAG. Cette technique permet de faire varier le gain de signal en fonction du niveau détecté, en augmentant ce gain lorsque le niveau de signal est bas, et en le diminuant lorsque le niveau augmente, de façon à utiliser au mieux le codeur. Un tel circuit de CAG 1 reçoit, dans une chaîne de transmission principale, un signal d'entrée SE issu d'un détecteur infrarouge à transfert de charges 2 et délivre un signal codé $S_c$ à un circuit vidéo 3 destiné à fournir un signal vidéo de sortie SV adapté au standard TV utilisé pour la visualisation. Le circuit 1, comporte

- d'une part, des éléments montés sur la chaîne de transmission principale entre le détecteur 2 et le circuit 3, à savoir un additionneur 7 relié à un amplificateur à gain variable 4 lui-même relié à un échantillonneur/codeur 5, assurant un codage 10 ou 12 bits et
- d'autre part, une boucle de commande automatique.

Cette boucle comprend un processeur de commande de gain automatique CAG 6 qui effectue d'abord un filtrage spatial passe-bas du signal codé $S_c$, puis calcule la variance du signal filtré et ajuste la valeur de la variance à une valeur de consigne. Le filtrage spatial passe-bas permet d'"étaler" sur tous les pixels une brusque montée d'intensité lumineuse dans le paysage et donc d'éviter une trop grande diminution de gain. En sortie du processeur 6, la valeur du gain qui résulte de cet ajustement est appliquée à l'amplificateur 4 grâce à une liaison complétant la boucle de commandé automatique. Pour effectuer l'opération classique de suppression du continu par centrage du niveau avant amplification, le processeur 6 calcule également un niveau moyen pour former un premier signal de correction du circuit 1 à soustraire au signal d'entrée SE à travers l'additionneur 7 dont une entrée est reliée à une sortie du processeur 6. Le signal d'entrée SE et le premier signal de correction sont synchronisés trame à trame grâce à un filtre temporel (non représenté).

Par ailleurs, à partir du signal codé Se, une correction de non-uniformité des pixels peut être effectuée par une deuxième boucle de contre-réaction comprenant un circuit comparateur 8 des niveaux de référence des pixels, relié à un convertisseur Numérique/Analogique 9 pour soustraire un second signal de correction au signal d'entrée SE à travers l'additionneur 7.

Cette solution permet un "asservissement" de la dynamique du signal d'entrée au codeur, ce qui évite une saturation mais se traduit par une sensibilité d'autant plus faible que la dynamique du signal devient importante. Dans ces conditions, la détection de cible est systématiquement masquée par la présence de leurres pyrotechniques ou de sous-munitions qui provoquent des variations brutales ci'éclairement de la scène observée. D'autre part, la présence de brouilleurs, capables de déclencher une illumination intermittente à cadence élevée, conduisent à un effet de pompage du circuit de CAG résultant de l'instabilité de la boucle de commande automatique de gain.

Pour résoudre le problème posé et détecter des cibles de faible contraste thermique dans les conditions hostiles évoquées, l'invention propose un traitement différent du signal d'entrée basé sur une amplification conforme, c'est-à-dire reposant sur une loi d'amplification non linéaire et adaptée de manière à augmenter la précision sur les faibles amplitudes tout en respectant la dynamique du signal, cette solution permettant d'effectuer d'autre part une correction du signal d'entrée à travers une boucle de contre-réaction unique.

Plus précisément, l'objet de l'invention est un procédé de traitement de signal pour la détection de cibles notamment à faible contraste thermique, ce signal à traiter, dit signal d'entrée, étant initialement issu d'un détecteur matriciel à nxp pixels du type à transfert de charges recevant des radiations infrarouges provenant d'une scène observée et étant traité le long d'une chaîne de transmission pour fournir un signal de sortie à appliquer à un circuit vidéo pour obtenir un signal adapté au standard de télévision utilisé, un tel procédé étant caractérisé en ce qu'il comprend les étapes successives suivantes :

- prétraitement du signal d'entrée par soustraction d'un signal de correction fourni par une boucle unique de contre-réaction de la chaîne de transmission ;
- amplification du signal corrigé de manière non linéaire, les amplitudes de signai les plus faibles ayant un gain supérieur à celui appliqué aux amplitudes les plus élevées ;
- échantillonnage et codage du signal amplifié pour fournir un signal codé;
- calcul, d'une part, des corrections d'écart 1 d'uniformité de contraste des nxp pixels et, d'autre part, d'un niveau moyen dit continu du signal, pour former, après décodage, le signal de correction à soustraire au signal d'entrée à travers la boucle de contre-réaction ; et
- augmentation du rapport signal/bruit par traitement du signal codé en mode TDI ou en Post-Intégration pour fournir un signal de sortie apte à discriminer la présence d'une cible de celle d'une crête de bruit .

L'invention concerne également un circuit de conditionnement de signal pour la mise en oeuvre de ce procédé.

D'autres caractéristiques et avantages apparaîtront à la lecture de la description qui suit faite en référence aux figures annexées qui représentent, respectivement :

- la figure 1, un schéma synoptique d'un circuit de traitement de signal à amplification linéaire de l'Art Antérieur (déjà commenté) ;
- la figure 2, un diagramme représentant un exemple de fonction de transfert d'amplification conforme, selon l'invention ;
- la figure 3, un schéma synoptique du circuit de traitement de signal selon l'invention.

A la sortie d'un détecteur matriciel de nxp pixels à circuit à transfert de charges, les variations utiles du signal détecté représentent, successivement, les différentes intensités du flux lumineux reçus respectivement par les différents pixels. Afin de mesurer toutes les variations utiles du signal par rapport à un même niveau de référence, il est connu de procéder à un traitement du signal dit de "correction de non-uniformité" consistant à ramener à un même niveau les tensions de précharge détectées sur les pixels après conversion charges/tension en absence de toute illumination.

Selon l'invention, une première étape, dite de prétraitement du signal, effectue sur ce signal dans des conditions définies ci-après, une correction de non uniformité en même temps qu'une soustraction du niveau moyen. Cette dernière opération, classiquement appelée "suppression du niveau continu", permet de centrer les variations utiles du signal autour d'une valeur moyenne, ce qui est indispensable avant une amplification de type non linéaire.

Précisément, l'étape suivante consiste à amplifier le signal corrigé conformément à une fonction de transfert à multi-pentes, chaque pente donnant un gain différent pour chaque plage de valeurs d'entrée correspondante.

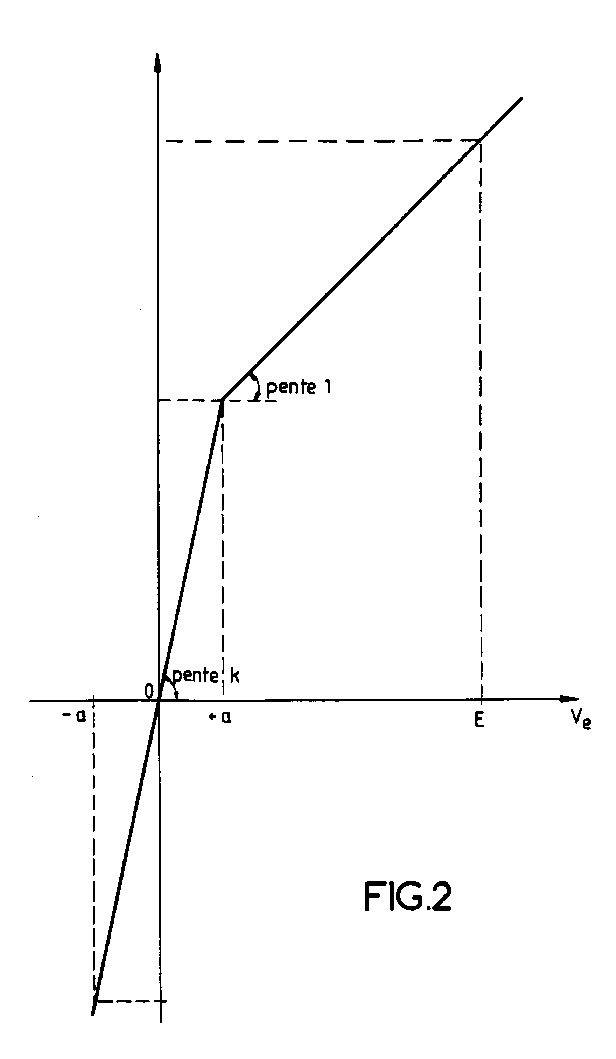

La figure 2, qui représente en abscisse la tension d'entrée $V_e$ et en ordonnée la tension de sortie $V_S$, fournit un exemple de fonction de transfert d'un amplificateur non linéaire à deux pentes correspondant à deux valeurs de gain : pour des tensions d'entrée $V_e$ faibles, compris entre -a et +a, le gain est de k>1 et, pour des tensions d'entrée situées dans une plage allant de +a à E, le gain est de 1. Ainsi, pour des valeurs de tension d'entrée variant autour de 0, la fonction de transfert représentée fait correspondre, en sortie, une plage de valeurs de tensions de sortie V k fois plus étendue.

Dans ces conditions, l'écart-type du bruit $\sigma_b$ et les faibles valeurs de tension peuvent être suffisamment amplifiés pour pouvoir, dans une étape suivante, être échantillonnés et codés. Par exemple, si l'écart-type du bruit $\sigma_b$ amplifié k fois est de l'ordre de grandeur du LSB d'un codage 12 bits, noté LSB $_{12}$, alors k = $LSB_{12}/\sigma_b$. Or si un codage 15 bits a une précision telle que le $LSB_{15}$ soit de l'ordre de grandeur de l'écart-type du bruit $_b$ non amplifié, l'amplification équivaut à un codage 15 bits pour les faibles valeurs lorsque k = $LSB_{12}/LSB_{15} = 2^{15}/2^{12} = 8$.

Ainsi, les performances de la détection sont limitées par la sensibilité du détecteur et non par le pas d'échantillonnage utilisé, le bruit et les faibles valeurs du signal codés étant décorrélés selon des niveaux propres, non grâce à une précision absolue du codage, mais grâce à une amplification non-linéaire préalable adaptée du signal. La précision est donc augmentée pour les faibles niveaux sans saturer le signal.

Les niveaux codés sont utilisés pour constituer un signal de correction à soustraire au signal d'entrée issu du détecteur lors de l'étape de traitement préalable, le signal de correction étant constitué par calcul, à l'aide d'un processeur non spécialisé, des écarts d'uniformité des pixels et d'un niveau moyen et par conversion analogique. Enfin, les niveaux codés vont constituer un signal vidéo après augmentation de la sensibilité grâce aux traitements de TDI ou de post-intégration déjà décrits et de standardisation aux normes TV adaptées.

Il est à souligner que les traitements d'augmentation de sensibilité sont rendus efficaces dans le cadre de l'invention pour les faibles niveaux du fait du codage précis du bruit par l'étape d'amplification non linéaire. Le remplacement du processeur de CAG par un processeur non spécialisé permet de simplifier le schéma électronique de l'Art Antérieur en ne mettant en oeuvre qu'une seule boucle de contre-réaction pour la formation du signal de correction.

Un circuit de traitement selon l'invention est organisé selon une chaîne de transmission du signal d'entrée SE, provenant du détecteur 2, qui fournit un signal de sortie codé Sc, et une boucle de contre-réaction qui, à partir de niveaux codés formant le signal $S_k$ élabore un signal de correction à combiner au signal détecté à l'entrée de la chaîne de transmission.

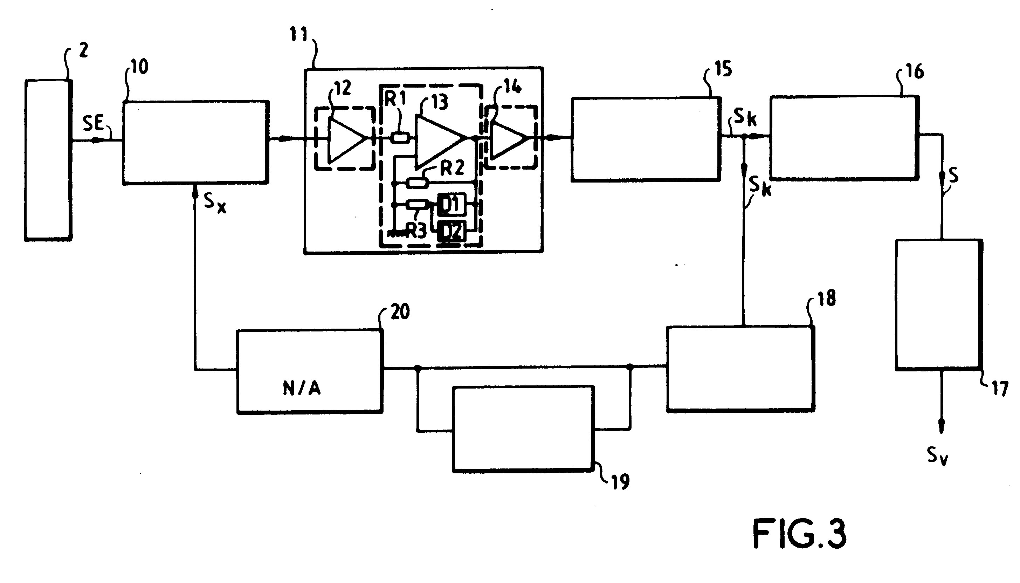

Un exemple de réalisation d'un circuit de traitement de signal selon l'invention est schématisé sur la figure 3. Un tel circuit de traitement comprend un additionneur 10 relié par une première entrée à la sortie du détecteur 2 et, par une seconde entrée, à la sortie d'une boucle de contre-réaction délivrant un signal de correction, un ensemble amplificateur 11 à trois étages, relié à la sortie de l'additionneur 10, un tel ensemble comportant un pré-amplificateur linéaire d'adaptation 12, un amplificateur non linéaire 13 et un post-amplificateur linéaire d'adaptation 14, un échantillonneur/codeur 15, lui-même relié, d'une part, à un circuit de post-traitement 16 couplé à un circuit de traitement vidéo 17 et d'autre part, à un processeur 18, pour le calcul d'écarts d'uniformité et de niveau continu, couplé à une mémoire 19 et à un convertisseur Numérique/Analogique 20 formant la boucle de correction unique. La dynamique du signal SE s'étendant par exemple sur 8 volts (de -0,5 à 7,5 volts), cette plage est réduite par application du signal à l'entrée d'un amplificateur d'adaptation 12 de gain ½ réduisant la plage de -0,25 à 3,75 Volts.

La sortie de l'étage de pré-amplification est reliée à l'étage d'amplification non linéaire afin de procéder à l'application d'une fonction de transfert du type de celle illustrée sur la figure 2, avec a= 0,25 Volt et E= 3,75 Volts. Seul l'étage d'amplification non linéaire est détaillé sur la figure 3 : il comporte un amplificateur différentiel 13, tel que celui commercialisé sous la dénomination LH 0032, deux diodes D1 et D2, commercialisées sous la dénomination 1N4148 et montées tête-bêche sur la boucle de réaction, et trois résistances R1, R2, R3. Les caractéristiques des diodes et des résistances déterminent la valeur de la pente k de la fonction de transfert. Par exemple, avec une tension de seuil des diodes de 0,6 Volt et $R_1 = 4,7$ k$\Omega$, $R_2 = 35$ k$\Omega$ et $R_3 = 1,05$ k$\Omega$, on obtient k = 8.

La sortie de l'amplificateur 13 est reliée à l'entrée de l'amplificateur 14 d'adaptation à gain égal à ½ de manière à réduire la plage de sortie d'environ 8 Volts à environ 4 Volts. Ainsi, le signal en sortie de l'amplificateur 14 peut être appliqué à l'échantillonneur-codeur 15 dont la gamme des tensions d'entrée est limitée à 4 Volts. Une sortie de l'échantillonneur/codeur 15 est reliée au circuit de post-traitement 16 pour l'augmentation du rapport S/B du signal codé, le circuit 16 étant soit un circuit de type TDI, en phase de recherche de cibles, soit un circuit de type post-intégration, en phase de poursuite de cible. Ces circuits fournissent un signal S ayant un rapport S/B amélioré, notamment pour les faibles niveaux du signal. Le circuit vidéo 17 permet, par tout moyen connu, de constituer un signal vidéo $S_V$ à partir du signal S.

La boucle de formation de signal de correction comporte le processeur 18 pour calculer successivement les coefficients d'écart d'uniformité entre les pixels à partir du signal codé $S_2$. Les dernières valeurs des coefficients sont mémorisées dans la mémoire 19 lors du passage de la phase de recherche de cibles à la phase de poursuite de cible ou de recherche sur une désignation d'objectifs. Avantageusement, l'utilisation du processeur 18 non spécialisé permet de calculer simultanément un niveau de signal moyen dit niveau continu à partir du signal codé $S_k$. Les coefficients d'écart et le niveau continu sont appliqués au convertisseur Numérique/Analogique 20 afin de former un signal de correction analogique $S_x$ pour corriger, par l'intermédiaire de l'additionneur 10, le signal initial SE provenant du détecteur 2. Un filtrage temporel classique (non représenté) permet de mettre en phase, trame à trame et pixel à pixel, le signal du correcteur $S_x$ et le signal d'entrée SE.

L'invention n'est pas limitée au mode de réalisation décrit et représenté : en particulier, d'autres types d'amplificateurs non linéaires peuvent être utilisés, par exemple des amplificateurs de type logarithmique où n étages d'amplification successives permettent de définir n gains successifs.

## Revendications

**1 -** Procédé de traitement de signal pour la détection de cibles notamment à faible contraste thermique, ce signal à traiter, dit signal d'entrée, étant initialement issu d'un détecteur matriciel à nxp pixels du type à transfert de charges recevant des radiations infrarouges provenant d'une scène observée et étant traité le long d'une chaîne de transmission pour fournir un signal de sortie à appliquer à un circuit vidéo pour obtenir un signal adapté au standard de télévision utilisé, un tel procédé étant caractérisé en ce qu'il comprend les étapes successives suivantes :

- prétraitement du signal, d'entrée par soustraction d'un signal de correction fourni par une boucle unique de contre-réaction de la chaîne de transmission ;

- amplification du signal corrigé de manière non linéaire, les amplitudes de signal les plus faibles ayant un gain supérieur à celui appliqué aux amplitudes les plus élevées ;

- échantillonnage et codage du signal amplifié pour fournir un signal codé ;

- calcul, d'une part, des corrections d'écart d'uniformité de contraste des nxp pixels et d'autre part, d'un niveau moyen dit continu du signal, pour former, après décodage, le signal de correction à soustraire au signal d'entrée à travers la boucle de contre-réaction ; et

- augmentation du rapport signal/bruit, par traitement du signal codé en mode TD1 ou en Post-Intégration, pour fournir un signal de sortie apte à discriminer la présence d'une cible de celle d'une crête de bruit .

**2 -** Circuit de traitement de signal de détecteur matriciel à transfert de charges pour la mise en oeuvre du procédé selon la revendication 1, caractérisé en ce qu'il comporte, entre la sortie du détecteur (2) et un circuit de traitement vidéo (17), une chaîne de transmission du signal d'entrée SE issu du détecteur (2) et une boucle de correction de signal fournissant un signal de correction à soustraire au signal $S_E$ par le biais d'un additionneur (10), en ce que la chaîne de transmission comporte l'additionneur (10) relié à un ensemble amplificateur (11) à amplification non linéaire couplé à un échantillonneur/codeur (15) luimême relié à l'entrée d'un circuit de post-traitement (16), l'échantillonneur/codeur (15) fournissant un signal codé ($S_k$) dont la sensibilité est augmentée par traitement à travers le circuit (16), le circuit (16) fournissant un signal (S) à un circuit vidéo (17) pour former un signal de visualisation au standard TV utilisé, et en ce que la boucle de correction de signal comporte un processeur (18) de correction du signal d'entrée (SE) dont l'entrée est reliée à la sortie de l'échantillonneur/codeur (15) et dont la sortie est appliquée à l'additionneur (10) de la chaîne de transmission, le processeur de correction (18) établissant un signal de correction à partir du calcul des écarts de non-uniformité de pixels du détecteur (2) et d'un niveau continu du signal codé $S_k$, ce signal de correction étant à soustraire du signal d'entrée $S_E$ par l'additionneur (10).

**3 -** Circuit de traitement selon la revendication 2, caractérisé en ce que le circuit de post-traitement (16) est un circuit d'Intégration à Temps Différé de type TDI en phase de recherche de cible et un circuit de Post-Intégration en phase de poursuite de cible, en ce que les niveaux du signal de correction fournis par le processeur (18) sont mémorisés dans une mémoire (19) avant d'être convertis grâce à un convertisseur Numérique/Analogique (20) pour former un signal de correction analogique $S_x$ à soustraire au signal $S_E$ grâce à l'additionneur (10), et en ce que les derniers niveaux mémorisés dans la mémoire (19) dans la phase de recherche de cible sont conservés dans la phase de poursuite de cible.

FIG.1

EP 0 514 254 A1

FIG.2

FIG.3

EP 0 514 254 A1

Office européen
des brevets

**RAPPORT DE RECHERCHE EUROPEENNE**

Numero de la demande

EP    92 40 1289

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-C-3 938 128 (ELTRO GMBH) <br> * le document en entier * <br> --- | 1 | H04N5/33 <br> H04N5/20 |
| Y | US-A-4 366 440 (OLSON ET AL.) <br> * le document en entier * <br> --- | 1 | |
| A | EP-A-0 193 443 (TH-CSF) <br> * le document en entier * <br> --- | 1 | |
| A | US-A-4 937 671 (ENGEL) <br> * le document en entier * <br> --- | 1 | |
| A | EP-A-0 419 342 (TH-CSF) <br> * abrégé; figure 4 * <br> --- | 1 | |
| A | EP-A-0 052 024 (TH-CSF) | 1 | |
| A | * abrégé; figure 1A * | 1 | |

-----

**DOMAINES TECHNIQUES RECHERCHES (Int. Cl.5)**

H04N

Le présent rapport a été établi pour toutes les revendications

| Lieu de la recherche | Date d'achèvement de la recherche | Examinateur |
|---|---|---|
| LA HAYE | 24 JUILLET 1992 | BLONDEL F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)

9